# EUROPÄISCHE PATENTANMELDUNG

(11) **EP 0 588 245 A2**
(43) Veröffentlichungstag der Anmeldung: **23.03.1994**
(21) Anmeldenummer: 93114531.2
(22) Anmeldetag: 10.09.1993
(51) Int. Cl.: G11B 23/087

(54) **Bandandruck-Koerper für Magnetbandkassetten und Magnetband-Kassette damit**

(30) Priorität: 18.09.1992 DE 9212496 U
(71) Anmelder: BASF Magnetics GmbH, D-68165 Mannheim (DE)
(72) Erfinder: Weber, Manfred, D-68199 Mannheim (DE); Schneider, Norbert, D-67122 Altrip (DE); Schaeffer, Norbert, D-67146 Deidesheim (DE); Bettinger, Guenter, D-67105 Schifferstadt (DE); Stransky, Reinhard, D-67167 Erpolzheim (DE); Balz, Werner, Dr., D-67117 Limburgerhof (DE)
(74) Vertreter: Karau, Wolfgang, Dr.

(57) **Zusammenfassung**

Die Anmeldung betrifft Bandandruck-Körper für Mehrspur-Band- und Kassetten-Systeme, wobei Schichtauflagen aus Gewirk/Gewebe- oder Vliesmaterial mit üblichen federnden Andruck-Materialien kombiniert oder allein verwendet werden, die bei Systemen höherer Speicherdichte die Anregung von Bandlängsschwingungen günstig herabsetzen und die Pegelgleichmäßigkeit über die Bandbreite wesentlich erhöhen. Die Materialien bestehen aus konventionellen Kunststoff-Fasern.

Verwendbar ist die Erfindung für jede Art von Bandaufzeichnungssystemen für analoge und/oder digitale Signale.

## Beschreibung

Die Erfindung betrifft Bandandruck-Körper für Magnetbandkassetten, bestehend aus einem flexiblen, Fasern enthaltenden Material, womit das Magnetband an den Magnetkopf zur Herstellung des Band-Kopf-Kontaktes angedrückt wird sowie Magnetband-Kassetten damit.

Der notwendige Band-Kopf-Kontakt in einem Aufzeichnungs- und Wiedergabesystem hängt im wesentlichen von der signaldichte und der Signalwellenlänge sowie letztlich auch von der Kopf- und Band-Beschaffenheit hinsichtlich ihres Gleitverhaltens und schließlich auch von der Bandgeschwindigkeit ab.

Bei hoher Signaldichte, die z.B. bei einem Audiokassettenband mit mehr als zehn Längsspuren gegeben ist, ist es ganz wesentlich, daß das Band über seine ganze Breite gleichmäßig an den Magnetkopf angedrückt wird, um jede Spur optimal beschreiben und vor allem optimal lesen zu können. Dafür werden Bandandruck-Körper benötigt, die über die normalen bekannten Bandandruck-Kissen hinausgehen.

Mit der EP-A-293 804 ist eine spezielle Andruck-Filzausbildung bekannt, bei der an der der Bandrückseite zugewandten Seite senkrecht stehende Kunststoff-Fasern vorgesehen sind, um Band-Vibrationen zu dämpfen und einen gleichmäßigen Andruck auch bei verschiedenen Formen von feststehenden oder rotierenden Magnetköpfen zu erreichen. Außerdem ist eine gute Reinigungswirkung durch die senkrecht stehenden Kunststoff-Fasern und den dazwischen zur Verfügung stehenden Schmutz-Aufnahme-Räumen beabsichtigt.

Mit der DE-A-32 32 587 wird für Systeme mit sehr unterschiedlichen Bandtransportgeschwindigkeiten beim Aufzeichnungs- und Wiedergabebetrieb ein Bandkissen für Magnettonbandkassetten bereitgestellt, das spezielle Dichtewerte, Durchmesser- und Längenwerte der Fasern sowie eine spezielle Oberflächenrauhheit aufweisen soll. Das Bandkissen soll direkt auf der Andruck-Blattfeder der Tonbandkassette angebracht sein.

Für eine genaue und gleichmäßige Aufzeichnung und Wiedergabe von sehr kurzwelligen Signalen hoher Dichte über eine relativ hohe Spurzahl ist ein solches Bandkissen jedoch nicht geeignet.

Die Erfindung hat sich die Aufgabe gestellt, insbesondere für das eingangs mehr als 10-Spur-Aufzeichnungssystem mit feststehendem Magnetkopf eine zweckmäßige, verbesserte Ausführung eines Band-Andruck-Körpers bereitzustellen.

Die Aufgabe wird mit einem Bandandruck-Körper für Magnetband-Kassetten, bestehend aus einem flexiblen, Fasern enthaltenden Material, womit das Magnetband an den Magnetkopf zur Herstellung des Band-Kopf-Kontaktes angedrückt wird, erfindungsgemäß dadurch gelöst, daß die Fasern ein Gewicht pro Länge von 0,1 bis 5 g/10000 m aufweisen und ein Flächengewicht zwischen ca. 20 und ca. 300 g/m besitzen, daß die Fasern, insbesondere mechanisch, miteinander verbunden sind, und daß die Fasern in Form einer Schicht den Bandandruck-Körper bilden und der Andruck über die Schicht gleichmäßig über die Bandbreite des Magnetbandes aufbringbar ist.

Damit wird ein Flaum-, Velour- oder Watte-Material für einen innigen gleichmäßigen Andruck zwischen Band und Kopf bereitgestellt, bei dem an allen Kopfspalten das Band mit praktisch derselben Andruckkraft angedrückt wird und damit eine störungsfreie Aufzeichnung und Wiedergabe ermöglicht wird.

In vorteilhafter Ausgestaltung der Erfindung kann das Schichtmaterial ein Vlies sein. Ein Vlies besitzt aufgrund seiner ungeordneten Faserlage eine kissenartige Struktur mit vorteilhafter Oberflächenstruktur um Bandrückseitenbeschädigungen zu vermeiden.

Außerdem kann das Schicht-Material auch ein Gewirk oder Gewebe sein, das ähnliche Vorteile wie ein Vlies aufweist, wobei der Verbund der Fasern jedoch größer ist. Die Andruck- und Gleitfunktion eines solchen Gewirks oder Gewebes ist noch verbesserbar durch Aufrauhung der Oberfläche, so daß dort der Gewirk- oder Gewebeverbund zerstört ist, wodurch eine Velourstruktur an der Oberfläche erhalten wird. Es ist in beiden Fällen, eines Vlieses oder eines Gewirkes/Gewebes, notwendig, daß in der Nähe der Oberfläche der Schicht keinerlei Bindemittel, Klebmittel, Gleitmittel, Antistatika oder ähnliche Stoffe, vorhanden sind, da dadurch Band- und Kopffunktionsstörungen auftreten können. Der Reibungskoeffizient des Schichtmaterials liegt günstig im Bereich zwischen etwa 0,3 und etwa 0,4.

Der erfindungsgemäße Bandandruck-Körper mit der Schichtauflage bewirkt, daß bis zum Dreifachen der Normal-Band-Kopf-Andruckkraft und bei Normal-A/W-Bandgeschwindigkeit Resonanzamplituden im Frequenzbereich von ca. 10 kHz bis ca. 20 kHz einen Pegelabstand von mindestens 70 dB besitzen.

Dadurch wird sichergestellt, daß auch im ungünstigsten Fall störungsfreie Wiedergabe erreicht wird.

Zweckmäßig besitzt die Fasermaterialschicht eine Gesamtdicke von ca. 0,05 mm bis ca. 0,8 mm, wodurch die Wirksamkeit der Schicht gewährleistet wird.

Die Dicke der unzerstörten Gewirk- oder Gewebeschicht beträgt günstig etwa 0,05 bis etwa 0,6 mm.

Bei Verwendung eines Vlieses kann die Dicke etwa 0,15 bis etwa 0,6 mm, insbesondere 0,25 mm betragen.

Bei den obigen Schichtdickenangaben wurde die Verwendung einer federnden Unterlage, worauf die jeweilige Schicht angebracht ist, vorausgesetzt, was auch für sich eine vorteilhafte Ausführung eines Andruckkörpers darstellen soll.

Das Fasermaterial der Schicht besteht günstig zumindest teilweise aus Polyester und/oder Polyamid. Das Fasermaterial kann auch mit denselben oder vergleichbaren Vorteilen aus einer Faser der Gruppe Polypropylen, Polyacrylnitril, regenerierter Zellulose, Wolle und Zellulose-Triazetat oder Mischungen mehrerer Faserarten davon bestehen.

Der Bandandruckkörper mit Filz-Unterlage ist zweckmäßig durch das Dicken-Verhältnis gekennzeichnet, wobei die Dicke der Filz-Unterlage zur Dicke der Faserschicht von etwa 10:1 bis etwa 2:1, insbesondere etwa 5:1 bis etwa 7:1 betragen soll.

Eine Magnetband-Kassette mit einem Gehäuse und darin befindlichen koplanaren Bandwickeln, zwischen denen das Magnetband auf- und abgewickelt wird, und einer gegebenenfalls verschließbaren Gehäuse-Öffnung zum Heranführen eines Magnetkopfes an das Magnetband und einem Bandandruckkörper hinter dem Magnetband zum Herstellen des Band-Kopf-Kontaktes, kann erfindungsgemäß so ausgebildet sein, daß die Fasern ein Gewicht pro Länge von 0,1 bis 5 g/10000 m aufweisen und ein Flächengewicht zwischen ca. 30 und ca. 300 g/m, besitzen, daß die Fasern, insbesondere mechanisch, miteinander verbunden sind und daß die Fasern in Form einer Schicht zumindest einen Teil des Bandandruck-Körpers bilden und der Andruck über die Schicht gleichmäßig über die Bandbreite des Magnetbandes aufbringbar ist.

Mit einer solchen Kassette werden die obenbeschriebenen Vorteile erreicht.

Günstig besitzt die Faser-Schicht eine Gesamtdicke von ca. 0,05 mm bis ca. 0,8 mm.

Bei Verwendung einer federnden Unterlage, z.B. Filz, und einer Faser-Schichtauflage beträgt das Dickenverhältnis günstig etwa 10:1 bis etwa 2:1, insbesondere etwa 5:1 bis etwa 7:1.

Vorteilhaft sind auch alle anderen Ausgestaltungen von Andruckkörpern mit Schichtauflagen der oben beschriebenen Art.

Ausführungen der Erfindung sind beispielhaft in der Zeichnung dargestellt und nachfolgend beschrieben.

Figur 2 zeigt eine schematisch dargestellte Tonband-Kassette mit Bandandruck-Feder und daran befestigtem Bandandruckkörper.

Figur 1 zeigt einen perspektivischen Ausschnitt der Kassette nach Figur 2 mit einem Magnetkopf in Betriebsstellung.

Figur 3 zeigt eine Bandandruck-Körper-Ausführung mit ein einem 3-Schicht-Aufbau nach der Erfindung.

Figur 4 zeigt einen Bandandruck-Körper in 2-Schicht-Aufbau.

Figur 5 zeigt einen 1-Schicht-Bandandruck-Körper.

Figur 6 zeigt einen schematischen Meßaufbau für die Messung von Resonanzschwingungen des Bandes, vom Andruckkörper hervorgerufen.

Figuren 7 und 8 zeigen Pegeldiagramme über ein mittels Andruckkörper angedrucktes Magnetband über jede von 9 Längsspuren.

Eine etwa rechteckförmige Tonband-Kassette 1 hat in einer Frontseitenfläche 2 nicht dargestellte Durchtrittsöffnungen für Magnetköpfe und Bandandruckrollen. Öffnungen 3 und 4 sind für eine weitere, ebenfalls nicht dargestellte geräteseitige Tonwelle und für Bandführungsstifte vorgesehen. In der Nähe der Eckbereiche der Kassette 1 sind Umlenkrollen 10 hinter der Frontseitenfläche 2 drehbar gelagert. Ein Magnetband 11, das um diese Rollen 10 parallel zur Fläche 2 läuft, ist an drehbar gelagerten Wickelkernen 12 befestigt. Das Band 11 ist auf dem rechten Wickelkern 12 zu einem Bandwickel 13 mit größtem Umfang aufgewickelt, während der linke Wickelkern 12 nur ein paar Bandwindungen trägt. Zwischen Stiften 5 und einem Abschirmbügel 6 ist eine Blattfeder 7 mit einem daran befestigten Bandandruck-Körper 8 angeordnet. Die Feder 7 ist im Kassettengehäuse geeignet befestigt, beispielsweise durch Einklemmen in einem Schlitz usw. In Figur 2 ist ein Magnetkopf 14 in Betriebslage der Kassette 1 am Magnetband 11 dargestellt. Der Kopfspalt oder die Kopfspalte sind schematisch als gestrichelte Linie 15 angedeutet. Durch den Doppelpfeil A sind die Bandlaufrichtungen gekennzeichnet.

Der Bandandruck-Körper 8 besteht, wie in Figuren 2 - 4 erkennbar, aus einem Grundkörper 8A, der z.B. aus einem Filzmaterial oder Kunstleder besteht und einen flächenmäßigen Federkörper darstellt, und einer Schichtauflage 9, die geeignet, z.B. durch Kleben auf dem Grundkörper 8A, angebracht ist.

Die Schichtauflage 9 ist flächenmäßig ebenso groß wie die Vorderseite des Grundkörpers 8A und etwas größer in ihrer Höhe als die Breite des Magnetbandes 11.

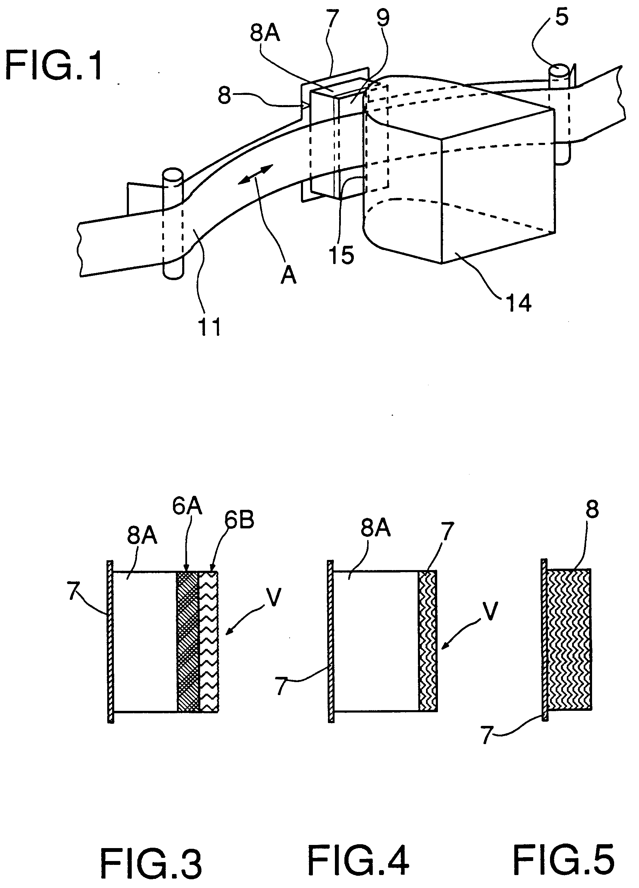

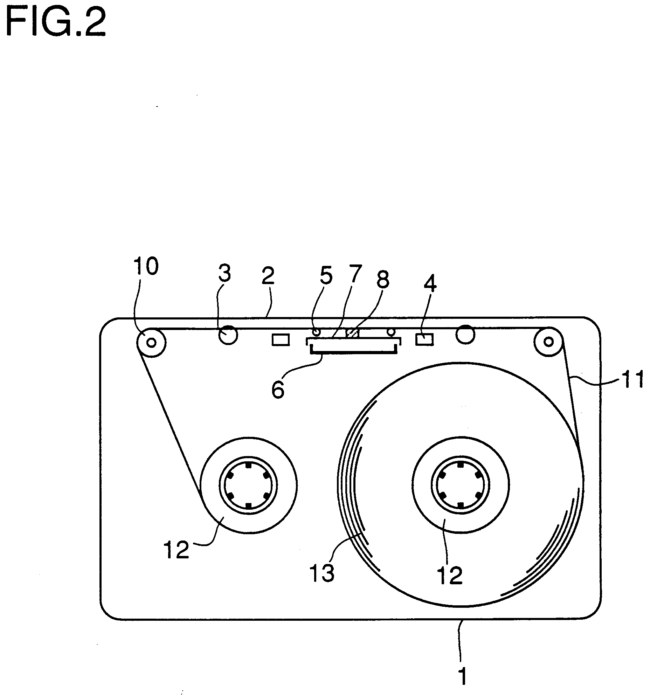

In Figur 3 besteht die Schichtauflage aus einem Gewirk- oder Gewebe-Teil 16a und einem Aufrauhungsteil 16b an der Vorderseite V.

Figur 4 zeigt die Schichtauflage als eine Vliesschicht 17 wiederum an der Vorderseite.

Figur 5 zeigt eine Schichtauflage als Vliesschicht 18 größerer Dicke als 17 und direkt auf dem Federkörper 7 angebracht.

Die aus den Gewirk- oder Gewebe-Teilen 16a und dem Aufrauhungsteil 16b bestehende Schichtauflage wird als Gewirk in einem Wirkvorgang oder als Gewebe in einem Webvorgang hergestellt. Anschließend wird die Oberfläche z.B. mit Kurznadel-Bürsten so aufgerauht, daß die Wirk- oder Webverbindungen teilweise zerstört oder aufgebrochen werden und Faserenden teilweise herausstehen. Durch Abscheren der Faserenden wird eine flauschige, wildlederartige Oberfläche erhalten, die als Berührungsfläche für Bandrückseite und Kopfspiegel sehr geeignet ist. Die Dicken der Gewirk- oder Gewebe-Teile 16a und 16b betragen dabei etwa 0,5 mm (16a) bzw. etwa 0,05 mm bis etwa 0,3 mm, vorzugsweise etwa 0,25 mm (16b), so daß eine Gesamtdicke der Schichtauflage 16 gebildet aus 16a und 16b etwa 0,8 mm betragen kann. Dabei wurde eine mittlere Faserstärke von etwa 10 µm bei einem Fasergewicht von 1,5 g pro 10000 m benutzt. Generell ist eine mittlere Faserstärke von etwa 10 bis etwa 25 µm bei Fasergewichten von ca. 1,5 bis etwa 5 g/10 000 m benutzbar.

Das Flächengewicht des Gewirkes/Gewebes betrug dabei ca. 160 bis ca. 180 g/m² (Faserstärke etwa 10 µm).

Das in Figur 4 dargestellte Vlies 17 als Schichtauflage besteht aus Fasern von einer mittleren Länge von ca. 50 mm und einer Faserstärke von etwa 5 bis etwa 15 µm bei einem Flächengewicht von etwa 85 g/m² bis etwa 110 g/m² oder bis etwa 25 µm bei größeren Flächengewichten.

Das Flächengewicht der Faserschichten kann jedoch prinzipiell im Bereich zwischen etwa 20 bis etwa 300 g/m² liegen, um im technischen Sinne und mit den angegebenen Vorteilen für die vorliegende Erfindung verwendbar zu sein.

Die Dicke des Vlieses 17 betrug etwa 0,15 bis etwa 0,6 mm, vorzugsweise 0,25 mm, der letzte Wert gilt besonders für die Vliesschicht im aufgeklebten Zustand. Die quasi-statisch gemessenen Reibungs-Koeffizienten des Gewirkes/Gewebes 16 und des Vlieses 17, 18 gegen die Bandrückseite R betrugen etwa 0,35 bzw. 0,38, gemessen über einer mit dem Material 16 bzw. 17, 18 überzogene Stahltrommel mit 10 cm Durchmesser und einer 180°-Umschlingung bei Belastung mit 20 g.

Die Dicke des Vlieses 18 in Figur 5 sollte, da keine als Feder dienende Filzunterlage zur Abstützung und Vergleichmäßigung der Andruckkräfte dient, größer sein als die wirksamen Gewirk-/Gewebe- und Vliesschichten 16 bzw. 17, deren Dicken im Bereich von ca. 0,05 bis ca. 0,3 mm liegen können.

Die Dicke des Vlieses 18 kann im aufgeklebten Zustand 0,15 mm betragen, sie kann jedoch ohne weiteres auch größer gewählt werden.

Die Dickenangaben des Gewirkes/Gewebes und des Vlieses wurden ähnlich DIN 53855 gemessen als Mittelwert aus 5 Messungen, wobei ein Druckstempel von 10 cm² Fläche und eine Druckkraft von 20 pond/cm² benutzt wurde.

Das Vliesmaterial 17 und 18 wird gewöhnlich aus Fasern hergestellt, die mittels Verbindungstechniken z.B. über Wasserstrahleinwirkung rein mechanisch miteinander verbunden, d.h. verhakt oder verfilzt werden.

Eine Verbindung über thermisches Schweißen ist ebenfalls denkbar. Die Schweißpunkte sollten dabei jedoch sehr klein gewählt und nach dem Verschweißen eine etwa gleichmäßige Dicke des Vlieses sichergestellt sein. Auch chemische Faserverbindungen sind bekannt.

Bindemittel, gleich welcher Art, sollten zumindest im Bereich der das Band berührenden Schichtauflage nicht vorhanden sein, da diese äußerst Bandlauf- und Kopffunktion-störende oder -schädigende Einflüsse bewirken können.

Die Schichtauflagen 16 und 17 sind auf die Filz-Unterlage 8A mit herkömmlichen Klebemitteln, z.B. Polyurethan-, Acrylatkleber oder einem Mischkleber aus Polyurethan-Butadien-Acryl-Nitril, aufklebbar. Die Schichtauflage 18 kann z.B. mittels doppelseitigen Klebebandes oder in anderer geeigneter Weise aufgeklebt werden.

Die Fasern der Schichtauflagen bestehen z.B. aus Polyamidfasern bei 16a, 16b und Polyester/Polyamid-Mikrofasern bei 17 und 18. Selbstverständlich können alle Schichtauflagen auch aus allen anderen geeigneten Faser bestehen, wie z.B. Polypropylen, Polyacrylnitril, regenerierter Zellulose, Wolle oder Zellulose-Triacetat.

Ein wesentliches Kriterium für das Schwingungsverhalten eines Andruckmaterials in Kontakt mit einem Magnetband (hier der Bandrückseite R) ist eine Resonanzstelle, die, bei den hier betrachteten Systemen etwa im Bereich von 10 kHz bis 20 kHz liegt und die als Quietschgeräusch hörbar ist.

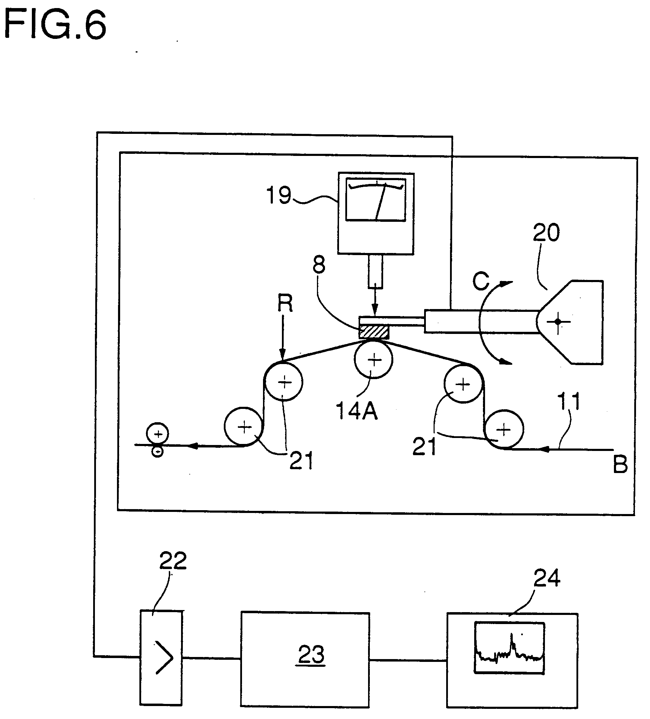

Figur 6 zeigt die Meßvorrichtung, mit der der Andruckkörper 8 mit den Schichtauflagen 16 oder 17 gemäß der Erfindung und der Grundkörper 8A allein hinsichtlich dieses Quietschens gemessen wurden.

Darin bedeuten:
- 11: das Magnetband mit einer Rückschicht, die im wesentlichen aus Polyurethan in Abmischung mit Hartkomponenten besteht
- 14A: einen Magnetkopf-Dummy
- 19: eine Kraftmeßdose zum Einstellen der Andruckkraft F in cN
- 20: ein Piezo-Aufnehmer, massefrei gelagert zur Beschleunigungsaufnahme ohne Dämpfung. Doppelpfeil C zeigt die Bewegungsrichtungen an.
- 21: stationäre Hilfswalzen
- 22: Verstärker des Meßsignals von 20
- 23: Spektrum-Analysierer
- 24: Schreiber
Das Magnetband 11 kommt am Punkt B aus einer Kassette oder vom Bandrohwickel und wird mit Normalgeschwindigkeit 4,75 m/sec über die Meßanordnung der Figur 6 gezogen. Mittels 19 wird die Andruckkraft zwischen Andruckkörper 8 und Band 11 bzw. Kopf-Dummy 14A eingestellt. Es ergaben sich folgende Meßergebnisse

| | | | |
|---|---|---|---|
| Andruck-Schicht-Material | 16 A, B | 17 | 8 A |
| Andruckkraft F[cN] | 60 | 60 | 40 |
| Resonanzfrequenz [kHz] | 15,3 | 14,3 | 11,5 |
| Pegel bei Resonanzfrequenz [dB] | -78 | -84 | -55 |

In jedem Fall wurden neue noch nicht benutzte Schichtauflagen 16 A,B bzw. 17, gemäß Figur 3 bzw. 4 auf einem Grundkörper 8A aus einem Andruckfilzmaterial der Fa. ATB, Mailand, verwandt und im letzten Fall der Grundkörper 8A allein ohne Schichtauflage.

Das Material des Grundkörpers 8A bestand aus einem Filz aus Polyesterfasern mit einem Fasergewicht von 3 g/10 000 m und einem stationären Reibungskoeffizienten von etwa 0,4.

Die Ergebnisse zeigen, daß bereits bei einer Andruckkraft von 40 cN eine Resonanzfrequenzspitze (Peak) bei etwa 11,5 kHz auftritt und mit der Amplitude von -55 dB, so daß ein deutliches Quietschen hörbar ist. Dieser Filz ist allein, ohne eine Schichtauflage gemäß der Erfindung somit nicht brauchbar.

Dagegen zeigten die beiden anderen Materialien Gewirk/Gewebe (16 A,B) oder Vlies (17) selbst bei einer Andruckkraft von 60 cN, also 50 % mehr als beim Filz 8A allein, jeweils nur eine schwache, nicht mehr eindeutig als solche erkennbare Resonanzstelle bei 15,3 kHz bzw. 14,3 kHz, bei einer Amplitude von -78 dB bzw. -84 dB, so daß kein Störgeräusch hörbar war und damit im Nutzsignal einer Bandaufzeichnung keine diesbezügliche Störung meßbar war.

Die Normal-Andruckkraft F der Kassette im Rekorder beträgt Fₒ = 20 cN also ein Drittel bzw. die Hälfte der in obigen Messungen benutzten Andruckkräfte.

Erfindungsgemäß soll das Material der Andruckschicht der vorliegenden Erfindung so gewählt werden, daß zumindest bis zu einer dreifachen Normal-Andruckkraft (hier bis 60 cN) kein Resonanzsignal auftritt, dessen Amplitude gleich oder größer -70 dB ist, damit auch bei ungünstigsten Verhältnissen mit Sicherheit kein auf Resonanzfrequenzen, insbesondere im Hörbereich, beruhendes Störgeräusch und damit auch keine Störung der Nutzsignalübertragung der Magnetaufzeichnung auftreten kann.

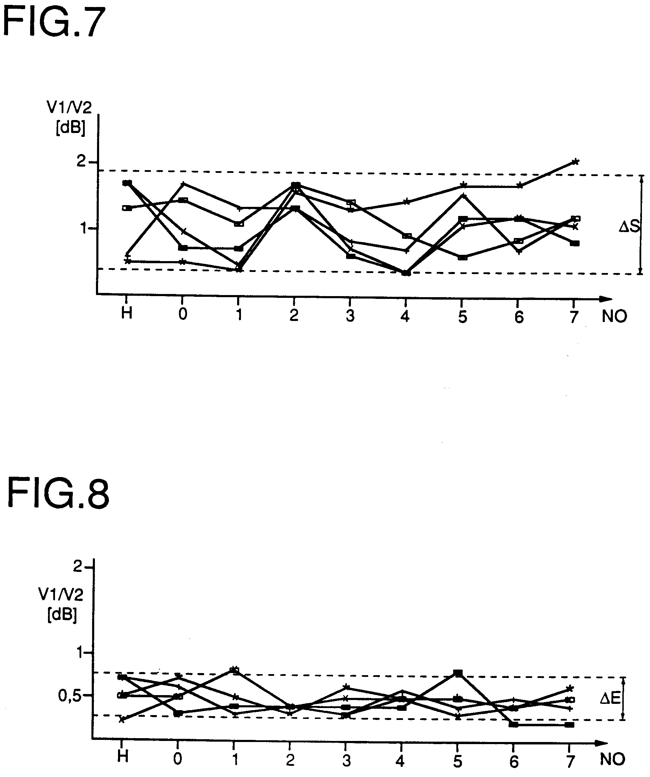

In den Figuren 7 und 8 sind Meßergebnisse dargestellt, die
- in Figur 8: mit Andruckkörpern 8 gemäß Figuren 3 und 4 mit Schichtauflagen gemäß der Erfindung und
- in Figur 7: mit einem Andruckfilz 8A der Fa. ATB, Mailand
und einem Kassetten-Magnetband mit 9 Spuren auf der halben Bandbreite, in denen jeweils ein 48 kHz-Signal aufgezeichnet war, erhalten wurden. Die Frequenz 48 kHz ergibt sich aus der kürzesten aufzuzeichnenden Wellenlänge im betrachteten Aufzeichnungssystem von 1 µm.

Die Messungen wurden mit einem Rekorder der Fa. Philips, Eindhoven, vom Typ AR 350 durchgeführt, und es wurden 5 verschiedene Kassetten mit jeweils denselben Andruckkörpern zur Messung verwandt und für jede einzelne der 9 Spuren das erhaltene Wiedergabesignal im Diagramm eingezeichnet. Für jede Kassette ist also eine spezielle, mit Rechteck oder Stern als Unterscheidungsmerkmal versehene Meßlinie dargestellt.

Im Fall der Figur 7 mit einem üblichen Andruckfilz wurde eine Signalamplitudenschwankungsbreite von ΔS ∼ 1,5 dB erhalten, die in dieser Breite nicht tolerierbar ist.

Im Falle der Figur 8 mit dem erfindungsgemäßen Andruckkörper 8 mit Schichtauflage 16 A,B wurde die Amplituden-Schwankungsbreite von ΔE ≦ 0,5 dB erhalten, was einer Amplitudenänderung von weniger als 10 % entspricht und was damit die Betriebssicherheit des Systems wesentlich erhöht.

NO ist die Bezeichnung der Spuren auf dem Magnetband der Kassette. V1/V2 bezeichnet das Amplitudenverhältnis in dB.

Die Erfindung betrifft Bandandruck-Körper für Mehrspur-Band- und Kassetten-Systeme wobei Schichtauflagen aus Gewirk/Gewebe- oder Vliesmaterial mit üblichem federnden Andruck-Materialien kombiniert oder allein verwendet werden, die bei Systemen höherer Speicherdichte die Anregung von Bandlängsschwingungen günstig herabsetzen und die Pegelgleichmäßigkeit über die Bandbreite wesentlich erhöhen. Die Materialien bestehen aus konventionellen Kunststoff-Fasern. Verwendbar ist die Erfindung für jede Art von Bandaufzeichnungssystemen für analoge und/oder digitale Signale.

## Patentansprüche

1. Bandandruck-Körper für Magnetbandkassetten, bestehend aus einem flexiblen, Fasern enthaltenden Material, womit das Magnetband (11) an den Magnetkopf (14) zur Herstellung des Band-Kopf-Kontaktes angedrückt wird, dadurch gekennzeichnet, daß die Fasern ein Gewicht pro Länge von 0,1 bis 5 g/10000 m aufweisen und ein Flächengewicht zwischen ca. 20 und ca. 300 g/m² besitzen, daß die Fasern, insbesondere mechanisch, miteinander verbunden sind, und daß die Fasern in Form einer Schicht (16, 17, 18) zumindest Teil des Bandandruck-Körpers (8) sind und der Andruck über die Schicht (16, 17, 18) gleichmäßig über die Bandbreite des Magnetbandes (11) aufbringbar ist.

2. Bandandruck-Körper nach Anspruch 1, dadurch gekennzeichnet, daß die flexible Fasern enthaltende Materialschicht ein Vlies (17, 18) ist.

3. Bandandruck-Körper nach Anspruch 1, dadurch gekennzeichnet, daß die flexible Fasern enthaltende Materialschicht ein Gewirk oder Gewebe (16) ist.

4. Bandandruck-Körper nach Anspruch 1, dadurch gekennzeichnet, daß die flexible Fasern enthaltende Materialschicht zumindest in der Nähe der dem Band (11) zugewandten Oberfläche keinerlei Bindemittel, Klebmittel, Gleitmittel oder Antistatika enthält.

5. Bandandruck-Körper nach Anspruch 3 oder 4, dadurch gekennzeichnet, daß die Oberfläche (16b) des Gewirks oder Gewebes aufgerauht ist, so daß dort der Gewirk- oder Gewebeverbund teilweise zerstört ist.

6. Bandandruck-Körper nach Anspruch 1 und einem der Ansprüche 2 bis 5, dadurch gekennzeichnet, daß der Reibkoeffizient des Faser-Materials zwischen ca. 0,3 und 0,4 liegt.

7. Bandandruck-Körper nach Anspruch 1 und einem der Ansprüche 2 bis 6, dadurch gekennzeichnet, daß bis zum Dreifachen der Normal-Band-Kopf-Andruckkraft und bei Normal-A/W-Bandgeschwindigkeit die Resonanzamplitude im Frequenzbereich von ca. 10 kHz bis ca. 20 kHz einen Pegelabstand von mindestens 70 dB besitzt.

8. Bandandruck-körper nach Anspruch 1 oder einem oder mehrerer der Ansprüche 1 bis 7, dadurch gekennzeichnet, daß die Fasermaterial-Schicht eine Gesamtdicke von d ca. 0,05 bis 0,8 mm besitzt.

9. Bandandruck-Körper nach Anspruch 5 oder 8, dadurch gekennzeichnet, daß die Dicke der Gewirk- oder Gewebeschicht ca. 0,05 bis 0,6 mm beträgt.

10. Bandandruck-Körper nach Anspruch 2, dadurch gekennzeichnet, daß die Dicke der Vliesschicht etwa 0,15 bis etwa 0,6 mm, insbesondere etwa 0,25 mm beträgt.

11. Bandandruck-Körper nach Anspruch 8, dadurch gekennzeichnet, daß die Fasermaterial-Schicht (16, 17, 18) auf einer Filzunterlage (8a) angebracht ist.

12. Bandandruck-Körper nach einem oder mehreren der Ansprüche 1 bis 11, dadurch gekennzeichnet, daß die Fasern des Fasermaterials der Schicht (16, 17, 18), zumindest teilweise aus Polyester bestehen.

13. Bandandruck-Körper nach einem oder mehreren der Ansprüche 1 bis 11, dadurch gekennzeichnet, daß die Fasern des Fasermaterials der Schicht (16, 17, 18), zumindest teilweise aus Polyamid bestehen.

14. Bandandruck-Körper nach einem oder mehreren der Ansprüche 1 bis 11, dadurch gekennzeichnet, daß das Fasermaterial der Schicht (16, 17, 18) aus einer Faser der Gruppe Polypropylen, Polyacrylnitril, regenerierter Zellulose und Zellulose-Triacetat oder Mischungen mehrerer Faserarten davon besteht.

15. Bandandruck-Körper nach Anspruch 11, dadurch gekennzeichnet, daß die Dicke der federnden Unterlage, z.B. Filz, zur Dicke der Fasermaterialschicht ein Verhältnis von etwa 10:1 bis etwa 2:1, insbesondere von etwa 5:1 bis etwa 7:1, besitzt.

16. Magnetband-Kassette mit einem Gehäuse und darin befindlichen koplanaren Bandwickeln, zwischen denen das Magnetband auf- und abgewickelt wird, und einer gegebenenfalls verschließbaren Gehäuse-Öffnung zum Heranführen eines Magnetkopfes an das Magnetband und einem Bandandruck-Körper hinter dem Magnetband zum Herstellen des Band-Kopf-Kontaktes, dadurch gekennzeichnet, daß der Bandandruckkörper aus einem flexiblen, Fasern enthaltenden Material besteht, dessen Fasern ein Gewicht pro Länge von 0,1 bis 5 g/10000 m aufweisen und ein Flächengewicht zwischen ca. 20 und ca. 300 g/m besitzen, daß die Fasern insbesondere mechanisch miteinander verbunden sind, und daß die Fasern in Form einer Schicht zumindest einen Teil des Bandandruck-Körpers bilden und der Andruck über die Schicht gleichmäßig über die Bandbreite des Magnetbandes (11) aufbringbar ist.

17. Magnetband-Kassette nach Anspruch 16 und einem oder mehreren der Ansprüche 2 bis 7, dadurch gekennzeichnet, daß die Fasermaterial-Schicht (16, 17, 18),eine Gesamtdicke von ca. 0,05 bis ca. 0,8 mm besitzt.

18. Magnetbandkassette nach Anspruch 17 und einem oder mehreren der Ansprüche 9 und 10 und 12 bis 15, dadurch gekennzeichnet, daß die Fasermaterial-Schicht (16, 17) auf einer federnden Unterlage, z.B. einer Filz-Unterlage (8a), angebracht ist.
